# EUROPEAN PATENT SPECIFICATION

(11) **EP 3 287 581 B1**
(45) Date of publication and mention of the grant of the patent: **03.03.2021**
(21) Application number: 16185119.1
(22) Date of filing: 22.08.2016
(51) Int. Cl.: E05F 11/06, E05F 15/627, E05F 15/619, F16D 1/10, F16H 57/00

(54) **WINDOW CHAIN ACTUATOR**
FENSTERKETTENANTRIEB
ACTIONNEUR DE CHAÎNE DE FENÊTRE

(43) Date of publication of application: 28.02.2018
(73) Proprietor: VKR Holding A/S, 2970 Hørsholm (DK)
(72) Inventor: SKALLEBÆK, Henrik, DK-7321 Gadbjerg (DK)
(74) Representative: Patentgruppen A/S

(56) References cited:
- EP-A1- 1 813 757
- EP-A2- 2 573 306
- DE-A1-102004 047 184
- DE-A1-102006 028 286
- US-A- 3 750 489
- US-A- 5 813 171

## Description

### Technical field

The present invention relates to an electrical window actuator, particularly to an electric push-pull chain actuator and the internal gear train of the actuator.

### Background art

Windows such as roof windows may be provided with a motor drive for achieving motorized opening and closing operations of the window. The motor drive includes a DC motor and a gear train for obtaining a sufficiently large driving torque. Accordingly, the gear train has to be dimensioned so that it is able to withstand wear to achieve trouble-free operation, yet the motor drive has be to designed with respect to certain production cost limitations. Such motor drives may use a thrust chain for transferring forces from the motor drive to the moveable part of the window.

Accordingly, there is a need for a motor drive for operating windows which is durable enough to operate windows having certain driving force requirements, e.g. driving force requirements set by the weight of windows or snow load requirements, and which has acceptable manufacturing costs.

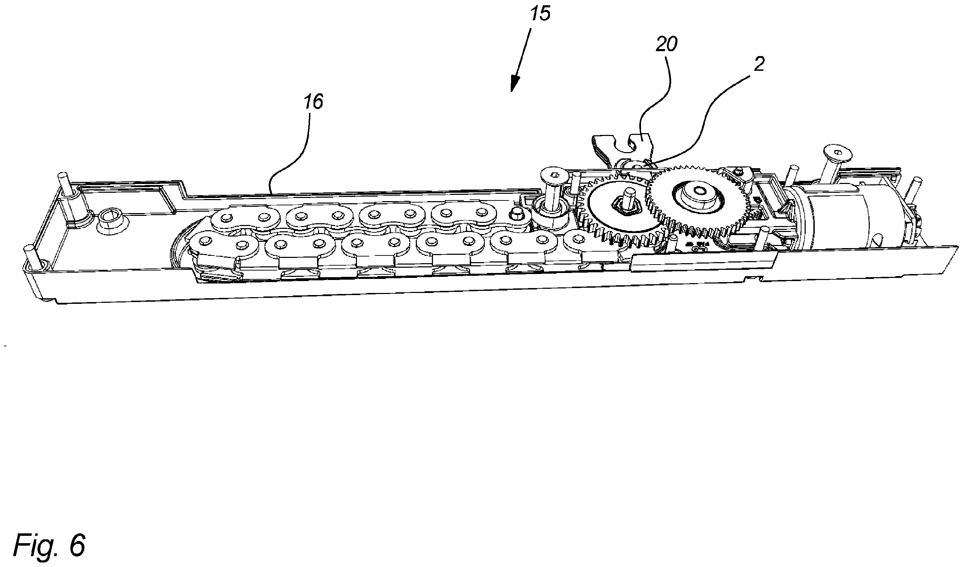

EP1813757 A1 discloses an electric push-pull actuator for windows with a gear train which comprises a double gear, as disclosed in fig. 6, which is moulded from plastic. This strength of this plastic double gear is limited according to the characteristics of the plastic material and may not be sufficient for certain windows due to high push-force requirements.

Alternatives to such moulded plastic double gears having greater strength are known. However, such alternatives may be expensive or complicated to manufacture. Accordingly, there is a need for a motor drive for windows having improved durability and which can be manufactured by a relatively simple process or with acceptable costs

EP2573306 discloses an example of a push-pull chain actuator.

### Summary of the invention

It is an object of the invention to provide an improved push-pull chain actuator for operating a window. Particularly it may be seen as an object to provide such actuator which addresses one or more of the above problems with respect to durability and reduced manufacturing costs, or which addresses other problems associated with motorized windows.

In a first aspect of the invention there is provided a push-pull chain actuator for operating a window, where the push-pull chain actuator comprises an electric motor and a gear train arranged to be driven by the electric motor and to push and pull a thrust chain, the gear train comprises:
- a driving gear,
- a driven double gear comprising an input gear and an output gear, where
   - the input gear comprises a centre hole having an internal non-circular engagement structure arranged at the inside circumference and arranged coaxially with the input gear, and where
   - the output gear comprises an external non-circular engagement structure arranged coaxially with the input and output gears and engaging with the internal engagement structure to rotatably lock the input gear to the output gear.

The driven double gear consists of two separate gears, i.e. a separate input gear and a separate output gear.

The internal non-circular engagement structure may have the form of a hole with an inner structure, e.g. one or more depressions in a cylindrical inner face. The external non-circular engagement structure may have the form of a rod with an outer structure, e.g. one or more protrusions on a cylindrical outer face. The internal engagement structure matches the external structure in a way so that the part of the output gear with the external engagement structure can be inserted via an axial displacement in the hole of the internal engagement structure. When inserted, the input and output gears are locked so that they will rotate together.

The driving gear may be connected to a shaft of the electric motor, i.e. so that the driving gear is rotatably locked to the shaft and arranged coaxially with the shaft.

It is understood that non-circular refers to any cross-sectional shape of the hole of the internal engagement structure and the rod of the external engagement structure which deviates from a geometric circle. For example, internal and external engagement structures in the form of inner and outer gears, respectively, have a cross-sectional shape in the form of a corrugated circle, i.e. a circle with is non-circular.

Accordingly, the function of the non-circular shape is to rotatably lock the input and output gears. That is, the engagement structures can be seen as deviations from a circle shape which prohibits rotation of the input gear with respect to the inserted output gear.

Advantageously, the internal and external engagement structures provide a simple method - and thereby cost effective method - for producing a double gear from two gears. In this way the input and output gears may be manufactured by different methods and e.g. from different materials in order to optimise both durability and production costs.

Due to the matching non-circular cross-sectional shapes of the hole of the input gear and the axial extension of the output gear, the input and output gears rotatably locks when the axial extension is inserted in the hole of the input gear. Accordingly, the double gear may simply be manufactured by inserting a length of the output gear in the input gear.

According to the invention, the internal engagement structure comprises internal teeth and the external engagement structure comprises external teeth which mesh with the internal teeth. The external teeth of the output gear are geometrically similar or even identical to the gear teeth of the output gear so that the external engagement structure can be produced together with the teeth of the output gear. This may advantageously reduce production costs. Accordingly, the external teeth have the same or substantially the same tooth profile as the teeth of the output gear and the internal teeth is then shaped as an inner gear in which the external engagement structure can be inserted.

According to an embodiment the external teeth and the teeth of the output gear extend unbroken along the axial length of the output gear. This provides simple manufacturing of the output gear and the external engagement structure. According to an embodiment the input gear and the output gear are made from different materials. Advantageously, the gears can be manufactured from materials suited for different load conditions of the gears.

For example the input gear may be made from a plastic material and/or the output gear may be made from a metal. For example, the teeth of the input gear may receive relatively low input forces whereas the teeth of the output gear may transmit relatively high output forces, i.e. forces larger than the input forces. In this case, the input gear may be made from a plastic material which provides sufficient strength for the input gear and advantageously allows cheap manufacturing of the input gear. The output gear may be made from metal or other high strength materials in order to provide higher strength of the output gear.

Thus, the diameter of the input gear may be larger than the diameter of the output gear, e.g. in order to provide a rotation speed reduction of the motor output.

According to an embodiment, the input gear is a worm gear. The input gear of the driven double gear is also configured as an input gear in case the input gear of the driven double gear is arranged to mesh with the input worm gear. Use of worm gears may be advantageous for achieving a compact design of the chain actuator and for obtaining a sleek elongated design suited for integration in a profile of a window.

According to an embodiment each of input gear and/or the output gear is made in one piece. Accordingly, the driven double gear may advantageously be manufactured from only to parts since the engagement structures are formed integrally with the input and output gears. Due to the simplified design with only two components, the driven double gear may be manufactured at low costs. Due to the two component design the double gear may consist of one material or possibly two different materials.

According to an embodiment the driving gear is connected to a shaft of the electric motor and the input gear meshes with the driving gear. Advantageously, the driven double gear may be arranged as a first gear stage, for example where the input gear of the driven double gear and the driving gear are plastic gears and the output gear is a metal gear. Due to the relatively low teeth forces between the first pair of meshing gears, the first double gear may advantageously be configured with a plastic input gear.

In a related embodiment where the driven double gear does not constitute the first gear stage, all gears located prior to a driven double gear are plastic gears or made from a plastic based material.

In another embodiment where the driven double gear may be a first stage gear or not, all gears located after the driven double gear are from metal.

According to an embodiment, the driven double gear comprises a shaft extending through a centre hole of the output gear and arranged to rotatably support the input gear and the output gear. The centre hole may be a through hole. The centre hole has the function of a bearing so that the output gear is able to rotate about the shaft. Alternatively, the shaft may be fastened to output gear so that the shaft rotates with the output gear - in this case the ends of the shaft may be rotatably supported by bearing portions of the chain actuator.

According to an embodiment, the push-pull chain actuator further comprises an intermediate gear arranged to be driven by the driving gear and arranged to drive the driven double gear. Such intermediate gears may advantageously be configured according to embodiments of the driving gear.

A second aspect of the invention relates to a roof window comprising
- a thrust chain, and
- a push-pull chain actuator according to any of the embodiments of the chain actuator and arranged to operate the roof window via the thrust chain.

The push-pull chain may be may be particularly advantageous for roof windows. Roof-windows set certain strength requirements to the push-pull chain actuator, e.g. requirements to be able to deliver a minimum lift force. For example, the roof window maybe an energy saving three-layer window with three glass layers having increased weight compared to two-layer windows. The roof window may be loaded with snow, which requires a minimum lifting force of the actuator. Accordingly, the push-pull chain actuator may be particularly advantageous for meeting the load demands of roof windows.

A third aspect of the invention relates to a method according to claim 13.

### Description of the drawings

Embodiments of the invention will be described, by way of example only, with reference to the drawings, in which
Fig. 1 show a window operated via a chain by a chain actuator,
Fig. 2 shows the mechanics of a chain actuator,
Fig. 3 shows the chain actuator from another angle,
Fig. 4 shows a close up view of the drive train,
Fig. 5 shows an exploded view of the drive train,
Fig. 6 shows the chain actuator arranged in a housing.

### Description of embodiments

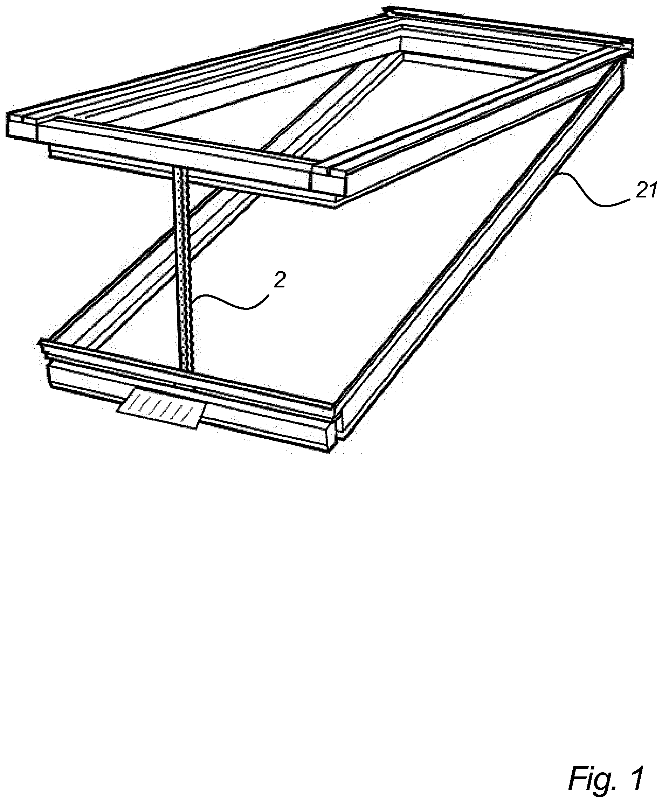

Fig. 1 shows a motorized roof window 21 which comprises a chain actuator (not illustrated) and a thrust chain 2 driven by a motor of the chain actuator and arranged to operate the roof window 21 to open or close. Roof windows 21 are particularly suited for motorized operation since they may be difficult to operate manually due to their location. However, the chain actuator may also be used to operate other types of windows such as vertical windows, e.g. in automated buildings.

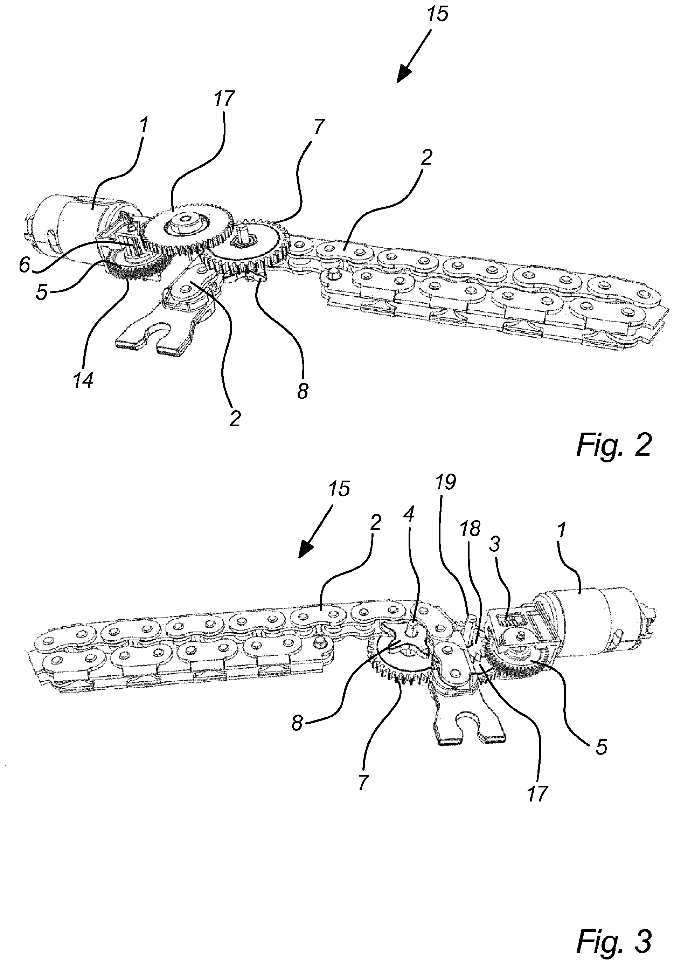

Fig. 2 and Fig. 3 illustrate two different orientations of an electric push-pull chain actuator 15 for windows.

The chain actuator 15 has a thrust chain 2 extended and withdrawn by a sprocket gear 8. The chain actuator has an electric drive motor 1 with an output shaft with a driving gear 3, in this example a worm gear. The chain actuator 15 comprises a driven double gear 14 which in this example is driven by and meshes with the driving gear 3.

The thrust chain 2 - also known as push-pull chains - is only flexible in one direction, i.e. the deflection in one of the two bending directions of a normal chain is prohibited, so that the thrust chain 2 is able to deliver both compressive and tensile forces.

In general the double gear 14 and other double gears described herein comprises two gears that are arranged axially side-by-side and interconnected to rotate together, e.g. by means of a mechanism which rotatably locks the two gears. One of the two gears acts as an input gear whereas the other acts as an output gear. The two gears may have different diameters in order to create a desired gear ratio of the gear chain of the chain actuator 15.

The double gear 14 comprises an input gear 5 which is rotatably and coaxially connected to an output gear 6 so that the input gear 5 and output gear 6 are rotatably locked and share the same rotation axis. Thus the input and output gears 5, 6 are connected to rotate together.

The diameter of the output gear 6 may be smaller than the diameter of the input gear 5. Therefore, the output force transmitted by the teeth of the output gear is greater than the input force received by the input gear 5. Accordingly, the strength requirement to the teeth of the output gear 6 is greater than the strength requirement of the input gear 5.

The input gear 5 may be the input gear of a first stage double gear 14 which meshes with the driving gear 3 connected to the shaft of the electric motor 1.

The chain actuator 15 comprises a further driven double gear 19 which in this example is driven by and meshes with the previous double gear 14. The further double gear 19 comprises an input gear 17 coaxially connected with the output gear 18. As shown the input gear 17 may have a diameter which is greater than the output gear 18.

The chain actuator 15 also comprises an output stage which comprises an input gear 7 which is arranged coaxially with and rotatably connected to output sprocket gear 8 to rotatably lock the input gear 7 and output sprocket gear 8.

The output sprocket gear 8 engages with the thrust chain 2 so that the chain can be driven by the motor 1 to open or close the window 21 by means of compressive or tensile forces.

The chain actuator 15 may comprise one or more double gears 14, 19 depending on the desired gear ratio or other design requirements.

The output stage with the input gear 7 and sprocket gear 8 may be another example of the double gears 14, 19, where the input gear 7 comprises an internal non-circular engagement structure 9, e.g. a hexagonal hole 11 as shown, and where the sprocket 8 being an example of an output gear 6 comprises an external non-circular engagement structure 10, e.g. a hexagonal rod 12 with a hexagonal cross-section 13, arranged coaxially with the input gear 7 and the sprocket gear 8 and engaging with the internal engagement structure 9 to rotatably lock the input gear 7 to the sprocket gear 8.

According to an embodiment the driving gear 3 and the input gear 5 of the double gear 14 are worm gears, e.g. for the purpose of achieving a sleek design of the chain actuator 15. Alternatively, the driving gear 3 and the input gear 5 may be configured as helical gears, e.g. for the purpose of reducing gear noise. In another embodiment the driving gear 3 and the input gear 5 may be configured as spur gears. Similarly, any of the other gears 6, 7, 17, 18 may be configured as spur or helical gears or a combination thereof where two meshing gears are of the same type.

According to the embodiment illustrated in Fig. 1 and Fig. 2 all gears in the gear train between the input gear 5 in the first gear stage and the sprocket gear 8 in the output stage are spur gears.

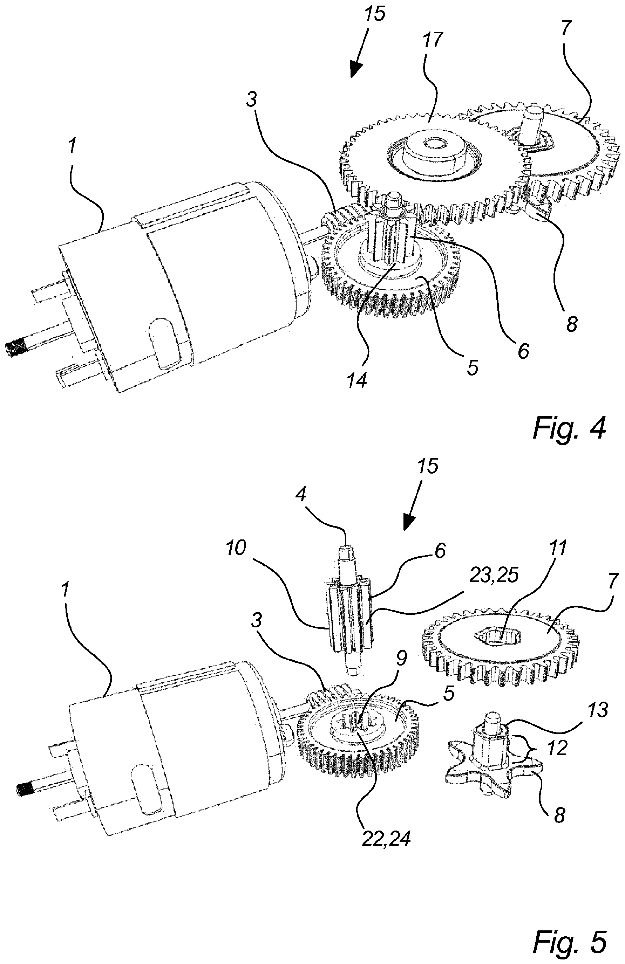

Fig. 4 shows the motor 1 and gear components of the drive train of the chain actuator 15 in an enlarged view and Fig. 5 shows an exploded view of the drive train.

Fig. 5 shows that the input gear 5 comprises a centre hole having an internal non-circular engagement structure 9 arranged at the inside circumference of the hole. Thus, the centre hole has a non-circular cross-sectional shape (cross-section perpendicular to the rotation axis of the hole) which forms the engagement structure 9. The non-circular cross-sectional shape may extend throughout the length of the hole. The hole is a centre hole, i.e. arranged coaxially with the input gear 5.

The output gear 6 comprises a corresponding external non-circular engagement structure 10 or protrusion shaped to mate the internal engagement structure 9. The external engagement structure 10 is arranged so that it is coaxial with the output gear 6, i.e. coaxial with the circumference of the output gear 6. Thus, the protrusion has a non-circular cross-sectional shape (cross-section perpendicular to the rotation axis of the protrusion) which forms the external engagement structure 10.

The internal and external non-circular engagement structures 9,10 are shaped so that the external engagement structure 10 can be inserted into the internal engagement structure 9. When inserted, the external engagement structure 10 is coaxial with the input and output gears 5, 6, i.e. with the circumference of the gears.

The internal and external non-circular engagement structures 9, 10 are furthermore shaped so that they rotatably lock the input gear to the output gear, i.e. so they are connected to rotate together.

The internal and external non-circular engagement structures 9, 10 may be shaped in various ways. In general the internal engagement structure 9 may be configured with one or more radially protruding engagement features 22, i.e. structures, and the external engagement structure is therefore configured with mating radially depressed engagement features 23, i.e. structures, arranged to engage with the protruding engagement feature 22.

Examples of such engagement features 22, 23, that do not form part of the invention, include meshing splines, meshing teeth, hexagonal shapes or other non-circular cross-sectional shapes of internal engagement hole 9 and external engagement protrusion 10.

For example, the internal engagement structure 9 may be formed as a hexagonal hole and the external engagement structure 10 may be formed as a hexagonal pin matching the hexagonal hole.

In another example, the internal engagement structure 9 comprises one or more radial depressions extending through the hole being a through hole and, therefore, the external engagement structure 10 comprises corresponding radial protrusions shaped to fit the depressions and extending from an end of the output gear 6 along the entire axial length or a fraction thereof. Accordingly, the engagement features 22, 23 may be in the form of such depressions and protrusions.

According to the invention, radial depressions of the internal engagement structure 9 are in the form of internal teeth 24 and the radial protrusions of the external engagement structure 10 are in the form of external teeth 25 which mesh with the internal teeth 22.

Accordingly, the internal engagement structure 9 is in the form of an inner gear and the external engagement structure 10 is in the form of an outer gear.

The outer gear of the external engagement structure 10 has have the same gear geometries as the output gear 6. The external engagement structure 10 is obtained by forming the teeth of the output gear 6 so that one end of the output gear 6 serves the function of a gear for meshing with an input gear while the opposite end of the output gear 6 serves the function of the external engagement structure 10.

Accordingly, the teeth 23 of the external engagement structure 10 have the same tooth profile or tooth geometry of as the teeth of the output gear 6.

The external teeth of the external engagement structure 10 and teeth of the output gear 6 which have the same geometry may extend unbroken along the axial length of the output gear 6 or a fraction of the length. Alternatively, the external teeth of the external engagement structure 10 and teeth of the output gear 6 having the same geometry may be formed so that they are separated axially by a portion of the output gear 6, e.g. by a circumferential depression or a flange.

The axial length of the external engagement structure 10 may be substantially equal to or possibly longer than the axial extension of the internal engagement structure 9. For example, the external engagement structure 10 may have a length which is slightly longer than the length of the hole of the internal engagement structure 9.

The engagement structure 9 or engagement hole may be formed so that the plane of the opening of the hole facing the output gear 6 does not extend axially beyond any other portion of the face of input gear 5 facing the output gear 6, e.g. other portions such as the edge of the gear teeth facing the output gear 6. Accordingly, the opening of the engagement structure 9 may be flush with other portions of the side of input gear 5 facing the output gear 6, or depressed with respect to such other portions

In other words, the output gear 6 has the same teeth geometry, i.e. the same external engagement structure 10, throughout the cylindrical surface of the output gear 6. Hereby the teeth have a dual function: the teeth mesh and drive a gear as usual but the teeth 10 also work as an interconnecting interface to connect to the input gear 5. Accordingly, the input gear 5 has matching internal teeth, i.e. a matching internal engagement structure 9, provided in the center bore. Accordingly, the output gear 6 may employ the same teeth profile both for driving another gear and for linking to the input gear 5.

The input gear 5 and the output gear 6 may be made from different materials. For example, the input gear 5 may be a plastic gear, e.g. made from nylon, polyester, polyamides, acetal copolymer or other plastic based material, preferably mouldable plastic material. The plastic based material may be reinforced by fibres or a filler. The output gear 6 may be a metal gear, made from copper alloys such as bronze, steel, sinter steel or other suitable metal. Alternatively, the output gear 6 may be made from a composite material. In one example the output gear 6 is made from a material which is stronger than the material of the input gear 5, e.g. the output gear 6 may be made from a material which has a lower elasticity and/or a greater hardness than the material of the input gear 5.

However, it is also possible the input and output gears 5, 6 are made from the same material, plastic based or metal.

According to the embodiments shown in Figs. 2-5, the diameter of the input gear 5 is larger than the diameter of the output gear 6 in order to provide a speed reduction.

Due to the design of the external engagement structure 10 which serves the dual functions of connecting to the input gear and driving a gear of a subsequent stage, the output gear 6 may be made in one piece from a single material - accordingly, the output gear 6 may be monolithic. The output gear 6 may be manufactured by conventional methods for metal and composite gears. Additionally, the input gear 5 may be made in one piece from a single material.

The output gear 6 may have a center through hole for receiving a support shaft 4. The center hole is concentric with the circumference of the output gear 6. The shaft extends through both ends of the gear 6 so that a cost effective and durable rotatable support is provided for the output gear 6 and the input gear 5. Accordingly, the driven double gear 14 may comprise a shaft 4 extending through a centre hole of the output gear 6 which rotatably supports both the input gear 5 and the output gear 6.

As previously described, the driving gear 3 may mesh with the input gear 5 of the driven double gear 14. According to alternative embodiments, the chain actuator 15 may include one or more intermediate gears located between the driving gear 3 and the driven double gear 14. Thus, such intermediate gears are arranged to be driven by the driving gear 3 and arranged to drive the driven double gear 14. The intermediate gears may be configured as double gears or other types. For example, the intermediate gears may be configured according to the embodiments of the driven double gear 14, but could also be configured otherwise, e.g. as a double gear manufactured in one piece from a plastic material, e.g. where the two gears of the double gear are moulded as a one piece gear.

The embodiments of the input gear 5 and the output gear 6 may be used for any of the double gears 14, 19 of the chain actuator 15. Accordingly, the input gear 17 and the output gear 18 may be configured according to the examples of the input and output gears 5, 6 described above. Thus, one, more or all of the double gears in the chain actuator 15 - and possibly also the output stage with the sprocket gear - may be configured according to the embodiments of the input and output gears 5, 6. Specifically, the first double gear 14 which meshes with the driving or motor gear 3, or the second double gear 19 which meshes with the output gear of the first double gear 14, or both the first and second double gears may be configured according to the described embodiments of the input gear 5 and the output gear 6.

Fig. 6 shows the chain actuator 15 arranged in housing 16. The housing 16 may be part of a profile of the window 21 or the housing 16 may be designed to be arranged together with a window profile. The thrust chain 2 comprises a connection member 20, e.g. in the form of a bolt hole on a fastening flange, a click connection, a press fitting, or other connection member suitable for connecting the chain 2 to a corresponding connection member of the moveable part of the window 21.

It is apparent that the disclosed chain actuator 15 is suitable for high insulating triple glazed roof or vertical windows with increased weight and increased load requirements to gears of the chain actuator. It is also apparent that the disclosed chain actuator 15 is suitable for roof windows which require increased strength to carry possible snow loads on the windows. Due to the increased weight of snow-safe windows and the possible additional snow weight, the chain actuator 15 with increased gear strength may be particularly suited for roof windows.

### List

1. Electric motor
2. Thrust chain
3. Driving gear
4. Shaft
5. Input gear
6. Output gear
7. Input gear
8. Output sprocket gear
9. Internal engagement structure
10. External engagement structure
11. Hexagonal hole
12. Hexagonal rod
13. Hexagonal cross-section
14. Double gear
15. Chain actuator
16. Housing
17. Input gear
18. Output gear
19. Further double gear
20. Connection member
21. Window or roof window
22. Depressed engagement feature
23. Protruding engagement feature
24. Internal teeth
25. External teeth

## Claims

1. A push-pull chain actuator (15) for operating a window (21), the push-pull chain actuator comprising an electric motor (1) and a gear train arranged to be driven by the electric motor and to push and pull a thrust chain (2), the gear train comprising
- a driving gear (3),
- a driven double gear (14, 19) comprising an input gear (5, 17) and an output gear (6, 18), where
- the input gear (5, 17) comprises a centre hole having an internal non-circular engagement structure (9) arranged at the inside circumference and arranged coaxially with the input gear, and where
- the output gear (6, 18) comprises an external non-circular engagement structure (10) arranged coaxially with the input and output gears and engaging with the internal engagement structure (9) to rotatably lock the input gear to the output gear, where the internal engagement structure (9) comprises internal teeth (24) and where the external engagement structure comprises external teeth (25) which mesh with the internal teeth (24) and where the external teeth (25) have the same or substantially the same tooth profile as the teeth of the output gear (6, 18).

2. A push-pull chain actuator according to claim 1, where the internal engagement structure (9) comprises a radially depressed engagement feature (22) and where the external engagement structure comprises a radially protruding engagement feature (23) arranged to engage with the depressed engagement feature (22).

3. A push-pull chain actuator according to any of claim 1, where the external teeth (25) and teeth of the output gear (6, 18) extend unbroken along the axial length of the output gear.

4. A push-pull chain actuator according to any of the preceding claims, where the input gear (5, 17) and the output gear (6, 18) are made from different materials.

5. A push-pull chain actuator according to any of the preceding claims, where the input gear (5, 17) is made from a plastic material and/or the output gear (6, 18) is made from a metal.

6. A push-pull chain actuator according to any of the preceding claims, where the diameter of the input gear (5, 17) is larger than the diameter of the output gear (6, 18).

7. A push-pull chain actuator according to any of the preceding claims, where the input gear (5, 17) is a worm gear.

8. A push-pull chain actuator according to any of the preceding claims, where each of input gear (5, 17) and/or the output gear (6, 18) is made in one piece.

9. A push-pull chain actuator according to any of the preceding claims, where the driving gear (3) is connected to a shaft of the electric motor, and where the input gear (5, 17) meshes with the driving gear (3).

10. A push-pull chain actuator according to any of the preceding claims, where the driven double gear (14) comprises a shaft (4) extending through a centre hole of the output gear (6, 18) and arranged to rotatably support the input gear and the output gear.

11. A push-pull chain actuator according to any of the preceding claims, further comprising an intermediate gear arranged to be driven by the driving gear (3) and arranged to drive the driven double gear (14).

12. A roof window (21) comprising
- a thrust chain (2), and
- a push-pull chain actuator (15) according to any of the preceding claims and arranged to operate the roof window via the thrust chain.

13. A method for manufacturing a push-pull chain actuator (15) according to claim 1, the push-pull chain actuator (15) being arranged to push and pull a thrust chain (2) for operating a window (21), the method comprising
- providing an electric motor having a driving gear (3),
- assembling a driven double gear (14) by
- proving an input gear (5, 17) which comprises a centre hole having an internal non-circular engagement structure (9) arranged at the inside circumference and arranged coaxially with the input gear,
- providing an output gear (6, 18) which comprises an external non-circular engagement structure (10) arranged coaxially with the second gear, and
- connecting the input gear (5, 17) with the output gear (6, 18) by inserting the external non-circular engagement structure (10) in the internal non-circular engagement structure (9) so that the input gear is rotatably locked to the output gear via the engagement structures, where the internal engagement structure (9) comprises internal teeth (24) and where the external engagement structure comprises external teeth (25) which mesh with the internal teeth (24) and where the external teeth (25) have the same or substantially the same tooth profile as the teeth of the output gear (6, 18).

## Patentansprüche

1. Push-Pull-Kettenantrieb (15) zum Betreiben eines Fensters (21), wobei der Push-Pull-Kettenantrieb einen Elektromotor (1) und einen Getriebezug umfasst, der angeordnet ist, um vom Elektromotor angetrieben zu werden und eine Schubkette (2) zu drücken und zu ziehen, wobei der Getriebezug umfasst:
- ein Antriebszahnrad (3),
- ein angetriebenes Doppelzahnrad (14, 19), das ein Eingangszahnrad (5, 17) und ein Ausgangszahnrad (6, 18) umfasst, wobei
- das Eingangszahnrad (5, 17) ein Mittelloch umfasst, das eine interne nicht kreisförmige Eingriffsstruktur (9) aufweist, die am Innenumfang angeordnet ist und koaxial zum Eingangszahnrad angeordnet ist, und wobei
- das Ausgangszahnrad (6, 18) eine externe nicht kreisförmige Eingriffsstruktur (10) umfasst, die koaxial zu dem Eingangs- und dem Ausgangszahnrad angeordnet ist und mit der internen Eingriffsstruktur (9) in Eingriff steht, um das Eingangszahnrad drehbar mit dem Ausgangszahnrad zu verriegeln, wobei die interne Eingriffsstruktur (9) Innenzähne (24) umfasst und wobei die externe Eingriffsstruktur Außenzähne (25) umfasst, die mit den Innenzähnen (24) in Eingriff stehen, und wobei die Außenzähne (25) das gleiche oder im Wesentlichen das gleiche Zahnprofil aufweisen wie die Zähne des Ausgangszahnrads (6, 18).

2. Push-Pull-Kettenantrieb nach Anspruch 1, wobei die interne Eingriffsstruktur (9) ein radial niedergedrücktes Eingriffsmerkmal (22) umfasst und wobei die externe Eingriffsstruktur ein radial hervorstehendes Eingriffsmerkmal (23) umfasst, das zum Eingriff mit dem niedergedrückten Eingriffsmerkmal (22) angeordnet ist.

3. Push-Pull-Kettenantrieb nach einem von Anspruch 1, wobei sich die Außenzähne (25) und Zähne des Ausgangszahnrads (6, 18) ungebrochen entlang der axialen Länge des Ausgangszahnrads erstrecken.

4. Push-Pull-Kettenantrieb nach einem der vorhergehenden Ansprüche, wobei das Eingangszahnrad (5, 17) und das Ausgangszahnrad (6, 18) aus unterschiedlichen Materialien hergestellt sind.

5. Push-Pull-Kettenantrieb nach einem der vorhergehenden Ansprüche, wobei das Eingangszahnrad (5, 17) aus einem Kunststoffmaterial hergestellt ist und/oder das Ausgangszahnrad (6, 18) aus einem Metall hergestellt ist.

6. Push-Pull-Kettenantrieb nach einem der vorhergehenden Ansprüche, wobei der Durchmesser des Eingangszahnrads (5, 17) größer ist als der Durchmesser des Ausgangszahnrads (6, 18).

7. Push-Pull-Kettenantrieb nach einem der vorhergehenden Ansprüche, wobei das Eingangszahnrad (5, 17) ein Schneckenrad ist.

8. Push-Pull-Kettenantrieb nach einem der vorhergehenden Ansprüche, wobei jedes von dem Eingangszahnrad (5, 17) und/oder dem Ausgangszahnrad (6, 18) aus einem Stück besteht.

9. Push-Pull-Kettenantrieb nach einem der vorhergehenden Ansprüche, wobei das Antriebszahnrad (3) mit einer Welle des Elektromotors verbunden ist und wobei das Eingangszahnrad (5, 17) mit dem Antriebszahnrad (3) in Eingriff steht.

10. Push-Pull-Kettenantrieb nach einem der vorhergehenden Ansprüche, wobei das angetriebene Doppelzahnrad (14) eine Welle (4) umfasst, die sich durch ein Mittelloch des Ausgangszahnrads (6, 18) erstreckt und angeordnet ist, um das Eingangszahnrad und das Ausgangszahnrad drehbar zu tragen.

11. Push-Pull-Kettenantrieb nach einem der vorhergehenden Ansprüche, ferner umfassend ein Zwischenzahnrad, das angeordnet ist, um von dem Antriebszahnrad (3) angetrieben zu werden, und angeordnet ist, um das angetriebene Doppelzahnrad (14) anzutreiben.

12. Dachfenster (21) umfassend
- eine Schubkette (2) und
- einen Push-Pull-Kettenantrieb (15) nach einem der vorhergehenden Ansprüche, und der angeordnet ist, um das Dachfenster über die Schubkette zu betreiben.

13. Verfahren zum Herstellen eines Push-Pull-Kettenantriebs (15) nach Anspruch 1, wobei der Push-Pull-Kettenantrieb (15) angeordnet ist, um eine Schubkette (2) zum Betreiben eines Fensters (21) zu drücken und zu ziehen, wobei das Verfahren umfasst
- Bereitstellen eines Elektromotors, das ein Antriebszahnrad (3) aufweist,
- Zusammenbauen eines angetriebenen Doppelzahnrads (14) durch
- Erproben eines Eingangszahnrads (5, 17), das ein Mittelloch umfasst, das eine innere nicht kreisförmige Eingriffsstruktur (9) aufweist, die am Innenumfang angeordnet ist und koaxial mit dem Eingangszahnrad angeordnet ist,
- Bereitstellen eines Ausgangszahnrads (6, 18), das eine externe nicht kreisförmige Eingriffsstruktur (10) umfasst, die koaxial mit dem zweiten Zahnrad angeordnet ist, und
- Verbinden des Eingangszahnrads (5, 17) mit dem Ausgangszahnrad (6, 18), indem eine externe nicht kreisförmige Eingriffsstruktur (10) in der internen nicht kreisförmigen Eingriffsstruktur (9) eingesetzt wird, so dass das Eingangszahnrad drehbar mit dem Ausgangszahnrad über die Eingriffsstrukturen verriegelt ist, wobei die interne Eingriffsstruktur (9) Innenzähne (24) umfasst und wobei die externe Eingriffsstruktur Außenzähne (25) umfasst, die mit den Innenzähnen (24) in Eingriff stehen, und wobei die Außenzähne (25) das gleiche oder im Wesentlichen das gleiche Zahnprofil aufweisen wie die Zähne des Ausgangszahnrads (6, 18).

## Revendications

1. Actionneur de chaîne de poussée-traction (15) destiné à actionner une fenêtre (21), l'actionneur de chaîne de poussée-traction comprenant un moteur électrique (1) et un train d'engrenages agencé pour être entraîné par le moteur électrique et pour pousser et tirer une chaîne de poussée (2), le train d'engrenages comprenant :
- un engrenage d'entraînement (3),
- un double engrenage entraîné (14, 19) comprenant un engrenage d'entrée (5, 17) et un engrenage de sortie (6, 18), où
- l'engrenage d'entrée (5, 17) comprend un trou central possédant une structure de mise en prise non circulaire interne (9) agencée sur la circonférence intérieure et agencée coaxialement avec l'engrenage d'entrée, et où
- l'engrenage de sortie (6, 18) comprend une structure de mise en prise non circulaire externe (10) agencée coaxialement avec les engrenages d'entrée et de sortie et se mettant en prise avec la structure de mise en prise interne (9) pour verrouiller en rotation l'engrenage d'entrée sur l'engrenage de sortie, où la structure de mise en prise interne (9) comprend des dents internes (24) et où la structure de mise en prise externe comprend des dents externes (25) qui s'engrènent avec les dents internes (24) et où les dents externes (25) possèdent le même profil ou sensiblement le même profil de dent que les dents de l'engrenage de sortie (6, 18).

2. Actionneur de chaîne de poussée-traction selon la revendication 1, où la structure de mise en prise interne (9) comprend une caractéristique de mise en prise radialement enfoncée (22) et où la structure de mise en prise externe comprend une caractéristique de mise en prise faisant saillie radialement (23) agencée pour se mettre en prise avec la caractéristique de mise en prise enfoncée (22).

3. Actionneur de chaîne de poussée-traction selon l'une quelconque des revendications 1, où les dents externes (25) et les dents de l'engrenage de sortie (6, 18) s'étendent sans interruption le long de la longueur axiale de l'engrenage de sortie.

4. Actionneur de chaîne de poussée-traction selon l'une quelconque des revendications précédentes, où l'engrenage d'entrée (5, 17) et l'engrenage de sortie (6, 18) sont fabriqués à partir de matériaux différents.

5. Actionneur de chaîne de poussée-traction selon l'une quelconque des revendications précédentes, où l'engrenage d'entrée (5, 17) est fabriqué à partir d'une matière plastique et/ou l'engrenage de sortie (6, 18) est fabriqué à partir d'un métal.

6. Actionneur de chaîne de poussée-traction selon l'une quelconque des revendications précédentes, où le diamètre de l'engrenage d'entrée (5, 17) est supérieur au diamètre de l'engrenage de sortie (6, 18).

7. Actionneur de chaîne de poussée-traction selon l'une quelconque des revendications précédentes, où l'engrenage d'entrée (5, 17) est un engrenage à vis sans fin.

8. Actionneur de chaîne de poussée-traction selon l'une quelconque des revendications précédentes, où chacun de l'engrenage d'entrée (5, 17) et/ou de l'engrenage de sortie (6, 18) est réalisé en une seule pièce.

9. Actionneur de chaîne de poussée-traction selon l'une quelconque des revendications précédentes, où l'engrenage d'entraînement (3) est raccordé à un arbre du moteur électrique, et où l'engrenage d'entrée (5, 17) s'engrène avec l'engrenage d'entraînement (3).

10. Actionneur de chaîne de poussée-traction selon l'une quelconque des revendications précédentes, où le double engrenage entraîné (14) comprend un arbre (4) s'étendant à travers un trou central de l'engrenage de sortie (6, 18) et agencé pour supporter en rotation l'engrenage d'entrée et l'engrenage de sortie.

11. Actionneur de chaîne de poussée-traction selon l'une quelconque des revendications précédentes, comprenant en outre un engrenage intermédiaire agencé pour être entraîné par l'engrenage d'entraînement (3) et agencé pour entraîner le double engrenage entraîné (14).

12. Fenêtre de toit (21) comprenant
- une chaîne de poussée (2), et
- un actionneur de chaîne de poussée-traction (15) selon l'une quelconque des revendications précédentes et agencé pour actionner la fenêtre de toit par l'intermédiaire de la chaîne de poussée.

13. Procédé permettant la fabrication d'un actionneur de chaîne de poussée-traction (15) selon la revendication 1, l'actionneur de chaîne de poussée-traction (15) étant agencé pour pousser et tirer une chaîne de poussée (2) en vue de l'actionnement d'une fenêtre (21), le procédé comprenant
- la fourniture d'un moteur électrique possédant un engrenage d'entraînement (3),
- l'assemblage d'un double engrenage entraîné (14) par
- l'établissement d'un engrenage d'entrée (5, 17) qui comprend un trou central possédant une structure de mise en prise non circulaire interne (9) agencée sur la circonférence intérieure et agencée coaxialement avec l'engrenage d'entrée,
- la fourniture d'un engrenage de sortie (6, 18) qui comprend une structure de mise en prise non circulaire externe (10) agencée coaxialement avec le second engrenage, et
- le raccordement de l'engrenage d'entrée (5, 17) à l'engrenage de sortie (6, 18) en insérant la structure de mise en prise non circulaire externe (10) dans la structure de mise en prise non circulaire interne (9) afin que l'engrenage d'entrée soit verrouillé en rotation sur l'engrenage de sortie par l'intermédiaire des structures de mise en prise, où la structure de mise en prise interne (9) comprend des dents internes (24) et où la structure de mise en prise externe comprend des dents externes (25) qui s'engrènent avec les dents internes (24) et où les dents externes (25) possèdent le même profil de dent ou sensiblement le même que celui des dents de l'engrenage de sortie (6, 18).
